# FASCICULE DE BREVET EUROPEEN

(11) **EP 3 055 149 B1**
(45) Date de publication et mention de la délivrance du brevet: **17.06.2020**
(21) Numéro de dépôt: 14761656.9
(22) Date de dépôt: 10.09.2014
(51) Int. Cl.: B60J 1/16, B60J 1/18, E05B 65/08, E05C 9/04

(54) **DISPOSITIF D'OBTURATION D'UNE BAIE D'UN VEHICULE AUTOMOBILE A PANNEAU COULISSANT, A POIGNEE MOBILE PARALLELEMENT A L'AXE DE COULISSEMENT ET LAME(S) SOUPLE(S), ET VEHICULE CORRESPONDANT**
VORRICHTUNG ZUM VERSCHLIESSEN EINER FAHRZEUGÖFFNUNG MIT EINER VERSCHIEBBAREN PLATTE, MIT EINEM GRIFF BEWEGBAR IN VERSCHIEBERICHTUNG UND MIT FLEXIBLEN LAMELLEN, UND ENTSPRECHENDES FAHRZEUG
DEVICE FOR CLOSING AN OPENING IN A MOTOR VEHICLE WITH A SLIDING PANEL, WITH A HANDLE MOVABLE PARALLEL TO THE SLIDING AXIS AND FLEXIBLE BLADES, AND CORRESPONDING VEHICLE

(30) Priorité: 10.10.2013 FR 1359857
(43) Date de publication de la demande: 17.08.2016
(73) Titulaire: Advanced Comfort Systems France SAS - ACS France, 79302 Bressuire Cedex (FR)
(72) Inventeur: COURJARET, Grégoire, F-79140 Le Pin (FR)
(74) Mandataire: Vidon Brevets & Stratégie
(86) Numéro de dépôt international: PCT/EP2014/069255
(87) Numéro de publication internationale: WO 2015/051964

(56) Documents cités:
- EP-A1- 1 916 132
- EP-A2- 1 153 780
- EP-A2- 1 700 979

## Description

### 1. Domaine de l'invention

Le domaine de l'invention est celui des baies de véhicule automobile. Plus précisément, l'invention concerne les dispositifs d'obturation d'une baie ménagée dans la carrosserie d'un véhicule, et comprenant une partie fixe rapportée de façon affleurante sur la carrosserie, par collage, et une partie mobile coulissante, essentiellement vitrée, susceptible de libérer ou de fermer une ouverture ménagée dans la partie fixe.

### 2. Techniques de l'art antérieur

Classiquement, pour obturer la baie d'un véhicule, qu'il s'agisse d'une automobile, d'un véhicule utilitaire, d'un camion, d'un autobus ou d'un wagon de chemin de fer, on rapporte une glace, maintenue par un cadre de liaison. Ce dernier présente une partie interne et une partie externe, qui viennent pincer simultanément les bords de la glace et de l'ouverture ménagée dans la carrosserie, avec une garniture d'étanchéité.

Une technique est décrite dans le document EP 1916132 A.

Une autre technique est décrite notamment dans les documents de brevet EP 0 778 168 et EP 0 857 844, au nom du titulaire de la présente demande de brevet. Le dispositif d'obturation présenté dans ces documents (appelé aussi par la suite « baie flush ») comprend une partie fixe comportant une portion vitrée, et une partie mobile essentiellement vitrée par rapport à la partie fixe. La partie mobile est reliée à la partie fixe par des éléments fonctionnels, ou rails, qui permettent la mobilité requise et qui sont rapportés sur la face de la partie fixe tournée vers l'intérieur du véhicule.

Une telle « baie flush » peut être montée intégralement indépendamment du véhicule, et rapportée, depuis l'extérieur, dans le logement défini à cet effet sur la carrosserie du véhicule. Elle peut également être solidarisée, en particulier par collage à la partie inférieure d'une portière, selon la technique décrite dans le document de brevet EP 1 022 172.

Sur le plan esthétique, la « baie flush » présente, vu de l'extérieur, un aspect lisse, affleurant avec la carrosserie (d'où le terme « flush » souvent utilisé dans le domaine), du fait qu'aucun cadre n'est nécessaire entre les bords de la carrosserie et la « baie flush ».

Pour assurer un coulissement du panneau mobile, constitué généralement par un panneau transparent, les moyens fonctionnels comprennent un dispositif de guidage comportant un premier et un second rails de guidage montés fixes sur le panneau fixe de la baie, de part et d'autre de l'ouverture fermée par le panneau mobile. Celui-ci est monté sur les rails, pour coulisser selon une direction longitudinale, dans un plan de coulissement entre une (ou plusieurs) position(s) d'ouverture et une position intermédiaire de dégagement dans laquelle il est en regard de la baie et dégagé de celle-ci.

Selon diverses techniques particulières, des moyens assurent la liaison du panneau mobile avec les rails de guidage de façon à permettre un déplacement transversal du panneau mobile entre sa position intermédiaire de dégagement dans laquelle il est en regard et en retrait transversal de la baie, et sa position d'obturation dans laquelle il est enchâssé dans la baie.

De tels moyens de guidage permettent ainsi à la partie mobile de passer du plan formé par la partie fixe (position d'obturation) à un plan sensiblement parallèle de coulissement, et réciproquement.

Il est également possible de combiner les deux mouvements, sous la forme d'un mouvement louvoyant, selon lequel le bord distal (c'est-à-dire le bord éloigné des moyens de verrouillage, également appelé bord avant) de la partie mobile se trouve, en fin de course, dans le plan de la baie (la partie mobile étant alors « en travers », entre le plan d'obturation et le plan de coulissement). Il suffit alors de ramener, manuellement, le bord proximal (c'est-à-dire le bord proche des moyens de verrouillage, également appelé bord arrière) pour assurer l'obturation.

L'invention se rapporte plus particulièrement à ce type de dispositif d'obturation, à ses variantes et ses perfectionnements.

Plusieurs solutions ont été proposées, notamment par le Demandeur, pour le verrouillage de la partie mobile dans la position fermée, et le cas échéant, dans des positions d'ouverture choisies. Elles sont souvent peu ergonomiques et/ou peu pratiques et nécessitent notamment de procéder à un effort, par exemple de serrage ou de rotation pour obtenir le verrouillage et/ou le déverrouillage. Notamment, elles présentent généralement des surfaces de préhension de taille réduite, imposée par la normalisation qui impose une taille limite (par exemple inférieure ou égale à 23 mm) pour les éléments faisant saillie vers l'intérieur du véhicule. Ces dimensions rendent difficiles l'action de déverrouillage et/ou le guidage en coulissement.

Un autre inconvénient des techniques connues est que, pour permettre d'effectuer avec une même poignée (ou avec un même ensemble de poignées, dans le cas où deux éléments de poignée sont proposés) les opérations de déverrouillage et de déplacement, il est généralement nécessaire de prévoir des moyens complexes pour l'actionnement, la transmission de l'action vers les pênes, le rappel dans une position de repos,... De plus, le montage, qui suppose de nombreuses pièces, est complexe et peut nécessiter des réglages particuliers.

Pour tenter de résoudre ces problèmes, il a été proposé, dans le document de brevet EP 2196341, de monter une poignée d'actionnement de façon qu'elle s'étende à partir de l'un desdits bords latéraux de la portion de cadre. On respecte ainsi l'obligation relative à une dimension limite de la poignée, vers l'intérieur du véhicule.

La solution proposée est relativement simple, techniquement, car le déplacement des deux membres de la poignée est parallèle au déplacement des pênes. Cependant, ce mode d'actionnement n'apparaît pas ergonomique ni intuitif, par rapport au déplacement du panneau en coulissement, une fois déverrouillée.

D'autres solutions sont illustrées. Cependant, aucune information technique n'est précisée pour leur mise en œuvre, et celle-ci s'avère peu aisée en pratique. En effet, un déplacement transversal de la poignée dans le cadre suppose la présence de moyens particuliers pour transformer ce déplacement en une action sur les pênes, qui imposent pour la plupart un débattement important de la poignée, et/ou la présence dans son prolongement de moyens de transmission. Ceci conduit à une largeur très importante de la portion de cadre portant la poignée, nuisible notamment à l'esthétique de l'ensemble et au clair de baie.

En outre, ces moyens ne garantissent généralement pas une homogénéité du déplacement des deux pênes, si la poignée n'est pas actionnée de façon parfaitement centrée et rectiligne, ce qui peut entraîner des blocages et/ou des difficultés de déverrouillage.

### 3. Objectifs de l'invention

Il existe donc un besoin d'un mécanisme simple et efficace, pour contrôler le verrouillage et le déverrouillage du panneau mobile d'un dispositif d'obturation d'une baie, qui soit simple, fiable et efficace.

Ainsi, selon un aspect particulier de l'invention, un objectif est également de fournir un tel dispositif, plus efficace et plus simple que ceux de l'art antérieur.

L'invention a également pour objectif de fournir un dispositif d'obturation d'une baie qui permette un verrouillage et un déverrouillage, et plus généralement une ouverture et une fermeture, aisés, intuitifs et sans effort important.

L'invention a encore pour objectif de fournir un dispositif d'obturation d'une baie qui soit simple à réaliser et à monter sur un véhicule.

Selon au moins certains modes de réalisation, un autre objectif de l'invention est de fournir un dispositif d'obturation d'une baie qui conserve l'ensemble des avantages des "baies flush" déjà développées par le titulaire de la présente demande, et notamment :
- Aspect esthétique affleurant ;
- Aspects aérodynamiques ;
- Facilité et coût réduit de fabrication ;
- Facilité et coût réduit de montage.

Un autre objectif particulier de l'invention est, au moins dans certains modes de réalisation, de fournir un tel dispositif d'obturation qui permette d'obtenir un clair de baie (c'est-à-dire de la surface transparente du véhicule) important, et donc notamment de limiter l'encombrement du cadre du panneau mobile.

Encore un autre objectif particulier de l'invention est, au moins dans certains modes de réalisation, de fournir un tel dispositif d'obturation qui soit peu encombrant et à faible débattement, tout en respectant les contraintes normatives et en offrant une bonne ergonomie.

### 4. Caractéristiques principales et optionnelles de l'invention

Tout ou partie de ces objectifs, ainsi que d'autres qui apparaîtront par la suite, sont atteints à l'aide d'un dispositif d'obturation d'une baie d'obturation d'une baie formée dans un élément de carrosserie d'un véhicule automobile, comprenant une partie fixe et au moins un panneau mobile par rapport à ladite partie fixe, guidé en coulissement par deux rails portés par ladite partie fixe, ledit panneau mobile portant deux pênes aptes à coopérer avec deux gâches correspondants, formés respectivement dans chacun desdits rails, et mobiles selon une direction de déverrouillage perpendiculaire à la direction de coulissement dudit panneau mobile, entre une position de verrouillage dans laquelle lesdits pênes sont en prise avec lesdites gâches, et une position de déverrouillage, permettant le coulissement, dans laquelle lesdits pênes sont extraits desdites gâches.

Selon l'invention, ledit panneau mobile porte une poignée d'actionnement desdits pênes, mobile selon une direction d'actionnement parallèle à ladite direction de coulissement, et des moyens de renvoi d'angle mettant en œuvre, pour chaque pêne, une portion de lame souple, dont une première extrémité s'étend parallèlement à ladite direction de verrouillage et est fixée audit pêne, et dont une seconde extrémité s'étend parallèlement à ladite direction d'actionnement et est fixée à ladite poignée, des moyens de guidage de ladite portion de lame contrôlant le changement de direction entre lesdites directions de verrouillage et d'actionnement.

On obtient ainsi un déverrouillage du panneau mobile particulièrement simple et efficace, permettant de contrôler le déverrouillage avec un déplacement relativement faible de la poignée.

Selon un mode de réalisation particulier, lesdits moyens de guidage comprennent un canal en arc de cercle de chaque côté de ladite poignée, défini par deux parois concentriques.

Ceci permet, de façon simple, de guider efficacement les portions de lame, sans risque de blocage ou de détérioration.

Lesdites parois peuvent notamment être solidarisées à une surface d'une portion d'un cadre dudit panneau mobile, ou formées dans la masse de celle-ci.

Selon un mode de réalisation particulier, l'une desdites parois assurent également une fonction de guidage de ladite poignée.

Il est en effet souhaitable de contrôler le déplacement de la poignée, perpendiculairement à l'axe défini par les pênes. Cette fonction peut être assurée, en tout ou en partie, par une portion extérieure d'une des parois, qui vient en contact avec le bord correspondant de la poignée.

Selon un mode de réalisation particulier, ledit panneau mobile porte au moins une portion de cadre s'étendant sensiblement entre les extrémités desdits pênes, et présentant une ouverture sur son bord latéral s'étendant sur le pourtour extérieur de ladite portion de cadre et/ou sur sa surface principale, ou façade, permettant le déplacement de ladite poignée.

Ceci permet de mettre en œuvre de façon simple une poignée ne dépassant pas, ou seulement faiblement, de l'épaisseur du cadre, tout en étant tout à fait ergonomique.

Notamment, dans ce cas, ladite portion de cadre peut porter, sur sa face latérale s'étendant vers l'intérieur dudit panneau mobile, au moins une zone de préhension complémentaire.

Par ailleurs, dans ce cas, ledit panneau mobile peut porter au moins un élément de guidage de ladite poignée selon ladite direction d'actionnement.

Selon une première approche, le dispositif de l'invention met en œuvre deux lames souples, correspondant chacune à l'une desdites portions de lame souple.

Dans ce cas, les deux lames souples sont solidarisées à la poignée.

Les deux portions peuvent également être reliées entre elles, et appartenir à une unique lame souple, présentant lesdites portions de lame souple et une partie centrale circulant dans et/ou le long de ladite poignée.

Selon un mode de réalisation, le dispositif de l'invention comprend des moyens de rappel agissant sur chacun desdits pênes, et tendant à les ramener dans ladite position de verrouillage. Dans ce cas, la ou lesdites lames souples peuvent ramener ladite poignée dans une position de repos, lorsque lesdits moyens de rappel ramènent lesdits pênes dans ladite position de verrouillage.

Selon un mode de réalisation particulier, la ou lesdites lames sont en acier.

L'invention concerne également les véhicules automobiles comprenant au moins un dispositif d'obturation tel que décrit ci-dessus.

### 5. Liste des figures

D'autres caractéristiques et avantages de l'invention apparaîtront plus clairement à la lecture de la description suivante d'un mode de réalisation préférentiel, donné à titre d'exemple illustratif non limitatif, et des dessins annexés, parmi lesquels :
- la figure 1 illustre schématiquement une « baie flush » mettant en œuvre l'invention ;
- les figures 2A et 2B illustrent plus précisément la poignée et le mécanisme de déverrouillage selon l'invention, respectivement dans la position verrouillée et dans la position déverrouillée ;
- la figure 3 est une vue agrandie de la figure 2B, présentant une partie de la poignée et le mécanisme de déverrouillage, dans la position déverrouillée ;
- les figures 4A et 4B présentent un exemple de poignée et d'une portion de cadre, pouvant être adapté au deux modes de réalisation ;
- les figures 5A et 5B illustrent une variante d'implantation de la poignée de commande, accessible en façade du cadre ;
- les figures 6A et 6B illustrent une variante de mise en œuvre, à lame unique, respectivement dans la position verrouillée et dans la position déverrouillée.

### 6. Exemples de mise en œuvre

### 6.1 présentation générale d'une « baie flush »

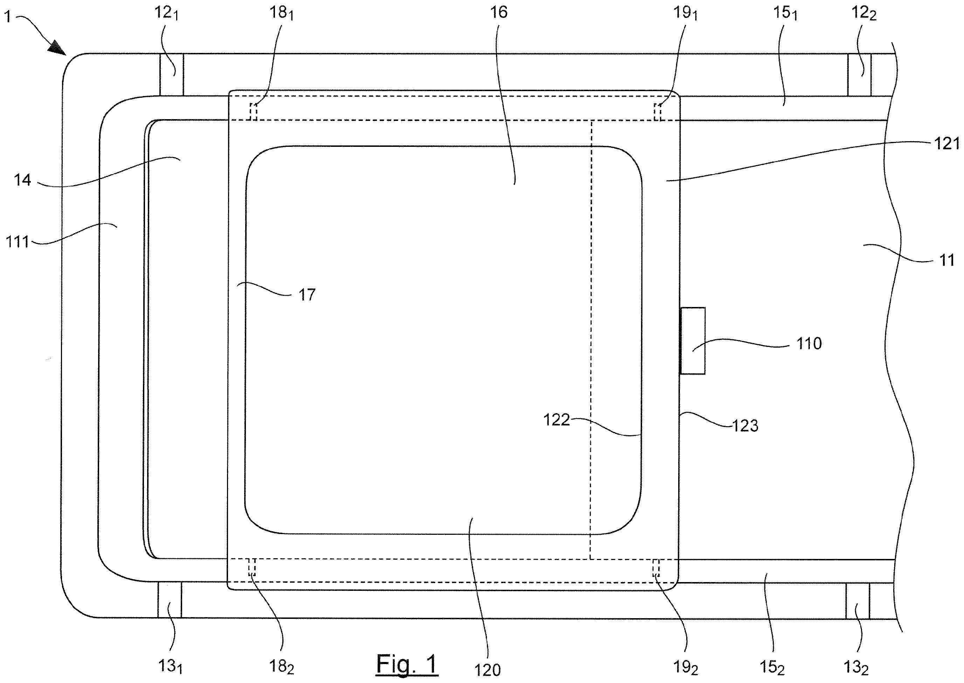

Un exemple de dispositif d'obturation 1 d'une baie formée dans un élément de carrosserie d'un véhicule automobile (ou « baie flush ») conforme à l'invention est illustré schématiquement sur la figure 1.

Une telle « baie flush » comprend tout d'abord une partie fixe 11, par exemple totalement ou essentiellement vitrée. Comme cela apparaît sur la figure 1, qui présente le côté destiné à être orienté vers l'intérieur du véhicule, la périphérie du panneau fixe 11 est libre (à l'exception des éléments 12₁, 12₂, 13₁ et 13₂ dont les fonctions sont rappelées ci-après). Ainsi, le dispositif d'obturation de la figure 1 peut être rapporté directement sur les bords d'une baie définie dans la carrosserie d'un véhicule depuis l'extérieur de celui-ci. Ces bords de la baie sont préférentiellement réalisés avec un léger retrait, correspondant sensiblement à l'épaisseur de la partie fixe 11, pour que celle-ci affleure avec le reste de la carrosserie, lorsqu'elle est montée sur le véhicule.

Notamment, la baie peut être formée dans une paroi latérale du véhicule (par exemple pour les véhicules utilitaires, les monospaces, les breaks,...), dans une paroi orientée vers l'arrière du véhicule (par exemple pour les « pick-up »), ou encore dans une portière (dans ce cas, les bords de la baie peuvent être en partie formés par des éléments de réception s'étendant depuis le caisson de la portière, le dispositif étant alors rapporté sur le bord supérieur du caisson et sur les éléments de réception qui s'étendent de celui-ci).

Un joint, ou cordon, de colle (non représenté) est placé sur le pourtour de la partie fixe, ou sur les bords de la baie de la carrosserie, et la périphérie de la partie fixe 11 est ainsi directement solidarisée par collage, aux bords de la baie, sans qu'il soit nécessaire de prévoir un cadre ou tout autre élément de liaison intermédiaire. Le cordon de colle assure également, avantageusement une fonction d'étanchéité.

Une ouverture 14 est réalisée dans la partie fixe 11. Comme on le voit sur la figure 1, les bords de cette ouverture 14 sont éloignés de la périphérie de la partie fixe 11, pour permettre la solidarisation de celle-ci aux bords de la baie, comme expliqué ci-dessus.

La partie fixe 11 peut être réalisée sous la forme d'un seul élément vitré, en verre ou en plastique adapté à une application à l'automobile, dans lequel est réalisée l'ouverture 14. Par vitré, on entend ici tout matériau apte à laisser passer au moins partiellement la lumière (matériau transparent, translucide, teinté,...).

La partie fixe 11 peut également être réalisée en plusieurs éléments constitutifs, ces éléments pouvant alors définir chacun un ou plusieurs côtés de l'ouverture 14. Une telle approche permet notamment de simplifier la réalisation de l'ouverture 14 dans un panneau de verre. Bien sûr, dans ce cas, les différents éléments constitutifs de la partie fixe se trouvent dans un même plan (qui peut, dans certains cas, être courbe, ou incurvé, dans au moins une dimension, par exemple pour suivre un galbe de la carrosserie). En effet, vue de l'extérieur, la partie fixe doit présenter un aspect lisse, ou affleurant.

La solidarisation de ces différents éléments constitutifs peut se faire par tout moyen adapté, par exemple par collage. Les rails 15₁ et 15₂ peuvent participer à cette solidarisation. Il est possible, sans sortir de l'invention, que l'un des éléments de la partie fixe ne soit pas vitré.

Selon une variante, la partie fixe 11 peut comprendre un élément de support, par exemple en par exemple en matière plastique, définissant notamment la périphérie de la partie fixe, et percée de deux ouvertures, l'une étant fermée de façon définitive par un élément vitré monté fixe, et la seconde correspondant à l'ouverture 14. L'élément de support et l'élément vitré fixe se trouvent dans le même plan, de façon à définir une surface lisse, vue de l'extérieur.

Le dispositif d'obturation comprend encore une partie mobile 16, pouvant venir obturer ou dégager l'ouverture 14. Cette partie mobile 16 comporte une portion vitrée 20, une portion de cadre, notamment un cadre 17 dans l'exemple illustré et un dispositif de verrouillage / déverrouillage. La partie mobile 16 est maintenue et guidée par les deux rails 15₁, 15₂, qui sont montés sur la face de la partie fixe orientée vers l'intérieur de véhicule et éloignés de la périphérie de cette partie fixe, pour les raisons déjà expliquées plus haut.

La partie mobile 16 peut être déplacée (ou se déplacer, si des moyens de motorisation sont prévus) le long des rails 15₁, 15₂, dans un plan de coulissement sensiblement parallèle au plan défini par la partie fixe 11. Ainsi, la partie mobile 16 peut prendre une ou plusieurs positions d'ouverture, selon sa position par rapport aux rails 15₁, 15₂.

Par ailleurs, la partie mobile 16 peut se déplacer perpendiculairement au plan défini par la partie fixe 11, de façon à venir obturer l'ouverture 14, dans une position fermée, dans laquelle elle affleure avec cette partie fixe 11, de façon à proposer un ensemble affleurant (carrosserie, partie fixe et partie mobile).

La face du panneau fixe tournée vers l'intérieur du véhicule porte par ailleurs un joint d'étanchéité (non représenté sur la figure 1) collé sur le contour de l'ouverture 14, dont l'extrémité de la lèvre vient prendre appui sur le panneau mobile 16, lorsque celui-ci est en position d'obturation. Dans une variante, le joint d'étanchéité peut être monté sur le cadre 17, pour venir en contact avec la partie fixe 11.

Le mouvement de la partie mobile 16 par rapport à la partie fixe 11 peut, selon une première approche, se décomposer en deux déplacements indépendants :
- un déplacement perpendiculaire par rapport au plan formé par la partie fixe, permettant le passage d'une position fermée et verrouillée, dans laquelle la partie mobile se trouve dans le même plan que la partie fixe et l'ouverture, à une position de libération, dans laquelle la partie mobile est décalée par rapport à la partie fixe dans un plan de coulissement, de façon à permettre ce coulissement ;
- un déplacement dans le plan de coulissement, parallèle au plan formé par la partie fixe.

D'autres mouvements sont bien sûr possibles. Ainsi, selon une deuxième approche, la partie mobile peut louvoyer, c'est-à-dire suivre une courbe selon laquelle les deux mouvements (verrouillage / déverrouillage et coulissement) sont liés au moment de l'ouverture et de la fermeture.

Les rails 15₁ et 15₂ peuvent être solidarisés à la partie fixe 11 par collage ou par tout autre moyen adapté. Ils peuvent également être directement formés, par exemple par moulage ou surmoulage, sur la partie fixe 11. Ils sont généralement dissimulés, de même que les autres éléments fonctionnels, par de la sérigraphie, empêchant qu'on les voit depuis l'extérieur du véhicule.

Dans certains cas, les rails peuvent être non parallèles.

Par ailleurs, il est important, pour des raisons de sécurité (et en conséquence d'homologation au regard d'aspects réglementaires et/ou législatifs relatifs à la sécurité des véhicules) que les rails 15₁, 15₂ soient solidarisés à la carrosserie, et plus précisément aux bords de la baie. En effet, selon le règlement européen EC43 par exemple, il est imposé que, en cas de bris de verre (en l'occurrence de la partie fixe 11), les éléments susceptibles d'être projetés présentent une taille et/ou un poids inférieur à une limite prédéterminée, fortement dépassée par les rails ou la partie mobile. On comprend cependant, que si rien n'est prévu, en cas de bris de la partie fixe 11, ni les rails 15₁, 15₂ ni le panneau mobile 16 ne seront maintenus. Ils seront donc projetés, et risquent donc de blesser un passager du véhicule ou un passant.

Comme cela a été proposé dans le document de brevet EP 0 778 168, le titulaire de la présente demande a donc proposé d'équiper les rails 15₁, 15₂ de prolongement 12₁, 12₂, 13₁, 13₂, qui s'étendent sur la face tournée vers l'intérieur du véhicule de la partie fixe 11, de façon à être pris en sandwich entre le bord de la partie fixe 11 et le bord correspondant de la baie de la carrosserie.

Ainsi, le cordon de colle solidarisant la partie fixe 11 à la carrosserie solidarise également ces prolongements 12₁, 12₂, 13₁, 13₂ au bord de la carrosserie du véhicule. En conséquence, même lorsque la partie fixe 11 est brisée, et donc absente, les rails 15₁ et 15₂ sont maintenus en place par rapport à la carrosserie à l'aide de ces prolongements. Les rails 15₁ et 15₂ maintiennent quant à eux la partie mobile 16.

Ces prolongements peuvent être formés par moulage directement dans le rail, ou être rapportés sur celui-ci par tout moyen adéquat, par exemple par collage ou clippage.

Le rail inférieur 15₂ porte des prolongements 13₁, 13₂ présentant par ailleurs une ouverture suffisante pour permettre l'évacuation de l'eau recueillie dans le rail 15₂, correspondant par exemple à la condensation dans le véhicule. Cette eau est ainsi simplement et efficacement évacuée à l'extérieur du véhicule, sans que cela ne nuise à l'étanchéité. Les fonctions de maintien en cas de bris et d'évacuation de l'eau, peuvent bien sûr être assurées par des éléments distincts.

Selon le mode de réalisation illustré, les deux rails 15₁ et 15₂ sont formés dans une même pièce comprenant un élément de liaison 111, s'étendant entre les deux rails, le long d'un bord de la partie mobile 16. Cette pièce est collée à la partie fixe 11.

Le cadre 17 s'étend sur la face de la partie mobile 16 orientée vers l'intérieur du véhicule. Ce cadre ne s'étend pas sur l'autre face, de façon à préserver l'aspect affleurant. Dans l'exemple illustré, le cadre 17 entoure la portion vitrée 120 sur la face de la partie mobile orientée vers l'intérieur du véhicule. Le cadre 17 présente une surface principale 21 sensiblement parallèle au plan défini par la portion vitrée 20 et deux bords latéraux 122 et ,23 dont l'un au moins, en l'occurrence le bord latéral 122, relie le cadre 17 à la portion vitrée. Les bords latéraux 122 et 123 sont, dans l'exemple illustré, sensiblement perpendiculaires au plan défini par la portion vitrée 120.

Dans l'exemple illustré, le cadre 17 porte au moins un pion de guidage supérieur 18₁ et un pion de guidage inférieur 18₂ prévus pour être guidés dans une coulisse correspondante formée respectivement dans les rails 15₁ et 15₂.

D'autres pions peuvent être également prévus pour le guidage souhaité.

Dans le mode de réalisation illustré, le guidage est complété par des pions complémentaires 19₁, 19₂ qui assurent simultanément une fonction de pêne, coopérant avec des gâches prévues à cet effet dans les rails 15₁ et 15₂ de façon à verrouiller la partie mobile 16 dans sa position fermée (et le cas échéant dans une ou plusieurs positions d'ouverture prédéterminées, des gâches correspondantes étant alors ménagées dans les rails aux emplacements adéquats).

### 6.2 poignée de déverrouillage

L'invention concerne en particulier cet aspect, et plus généralement l'actionnement des deux pênes (qu'ils assurent ou non également une fonction de guidage en coulissement, et/ou une fonction de butée d'ouverture maximum). Une poignée d'actionnement 110 apte à agir sur les pênes est montée sur le cadre 17, pour actionner le déverrouillage des pênes, selon la technique décrite par la suite, et permettre de faire coulisser la partie mobile 16.

Conformément à l'invention, la poignée d'actionnement 110 s'étend à partir de l'un des bords latéraux 122 et 123 du cadre 17, et non pas de sa surface principale 121. Ainsi, la poignée ne s'étend pas vers l'intérieur du véhicule, et la contrainte de longueur limitée dans cette dimension est respectée.

Dans l'exemple illustré, la poignée d'actionnement 110 s'étend à partir du bord latéral 123 du cadre 17. Des approches différentes, notamment avec une accessibilité partielle ou totale en façade sont possibles, comme illustré par la suite.

Le bord latéral 23 forme le pourtour extérieur du cadre 17. On ne sort pas de l'invention si le cadre 17 constitue seulement une portion de cadre (s'étendant par exemple uniquement sur la portion recouvrant les moyens reliant la poignée aux pênes) et non un cadre entourant complètement la portion vitrée mobile 120.

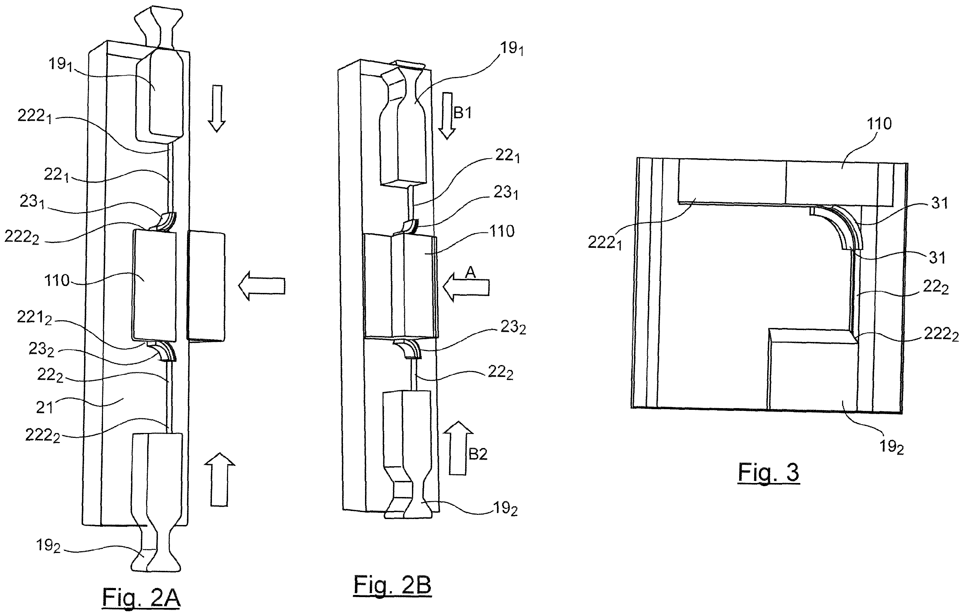

Les figures 2A et 2B illustrent plus précisément un montant 21 du cadre du panneau mobile, dont on a retiré la partie supérieure pour faire apparaître le mécanisme de déverrouillage.

La figure 2A présente le dispositif en position verrouillée. Dans cette position, c'est-à-dire lorsqu'aucune action n'est appliquée sur cette poignée, celle-ci dépasse sensiblement, dans ce mode de réalisation, de ce bord latéral 23, par exemple de 15 millimètres environ. Dans cette position, les pênes 24₁ et 24₂ sont dans la position verrouillée, aptes à coopérer avec les gâches correspondantes prévues à cet effet dans les rails.

La figure 2B présente les pênes 19₁ et 19₂ en position déverrouillée, c'est-à-dire rétractés vers l'intérieur du cadre, pour se désolidariser des gâches.

Le passage de la position verrouillée, qui est la position de repos, ou par défaut, à la position déverrouillée, se fait à l'aide de la poignée 110, placée sur le montant 21 du cadre, et mobile selon la direction X de coulissement du panneau mobile. En appuyant sur cette poignée 110, selon la flèche A (figure 2B), les verrous 19₁ et 19₂ sont déplacés selon les flèches B1 et B2, et extraits des gâches correspondantes.

Les liaisons entre la poignée 110 et les deux pênes 19₁ et 19₂ sont assurées respectivement par deux lames souples, ou lames ressorts, par exemple des lames d'acier, 22₁ et 22₂. Pour assurer le renvoi d'angle, des moyens 23₁ et 23₂ sont prévus, pour guider chacune des lames ressorts, de façon à assurer un renvoi d'angle, une première extrémité 231₁ et 231₂ de chaque lame étant solidarisée à un bord latéral de la poignée 110, et une seconde extrémité 232₁, 232₂ de chaque lame étant solidarisée à chaque pêne 19₁ et 19₂.

Les moyens de guidage 23₁, 23₂ sont constitués, selon le mode de réalisation illustré, et comme ceci apparaît plus clairement sur la figure 3, par deux parois concentriques 31 et 32, s'étendant à partir de la base du cadre, et perpendiculairement à celle-ci, pour définir un canal en arc de cercle s'étendant sur 90°, dans lequel circule la lame 22₂.

La paroi 31 peut en outre être adaptée pour venir en contact avec la poignée 110, de façon à guider celle-ci en translation.

En variante, les moyens de guidage 23₁, 23₂ peuvent être remplacés par d'autres éléments, assurant un guidage similaire, et par exemple par des plots cylindriques placés de façon adéquate.

Les extrémités 222₁, 222₂ de la lame peuvent être solidarisées à la poignée et aux pênes par tout moyen adéquat, tels que le collage, le vissage, le sertissage, le rivetage, ...

Les pênes 19₁, 19₂ coopèrent avec des moyens de rappel, de façon classique. Ces moyens de rappel ne sont donc pas illustrés sur les figures, pour faciliter la compréhension du mécanisme. Ces moyens de rappel tendent à ramener les pênes dans la position verrouillée (figure 2A). Il peut notamment s'agir de ressorts hélicoïdaux, montés parallèlement à l'axe de déplacement des pênes.

Les lames ressorts 22₁, 22₂ agissent aussi bien en traction qu'en compression. Ainsi, lorsque aucune action n'est appliquée sur la poignée 110, les moyens de rappel entraînent non seulement les pênes vers la position verrouillée, mais également, par l'intermédiaire des lames ressorts, la poignée 110, qui revient naturellement dans la position déverrouillée (figure 2A), sans qu'il soit nécessaire de prévoir de moyens de rappel spécifiques pour la poignée.

### 6.3 exemples de poignée

On peut noter que la poignée 110 peut être réalisée en une ou plusieurs deux parties. Il est notamment possible de prévoir une partie interne, technique, reliée aux lames ressort, et une portion externe 222, d'actionnement.

La partie interne peut, si nécessaire, présenter une lumière, qui peut coopérer avec un ergot formé dans le cadre, pour contrôler la direction de la course du bouton, et limiter celle-ci.

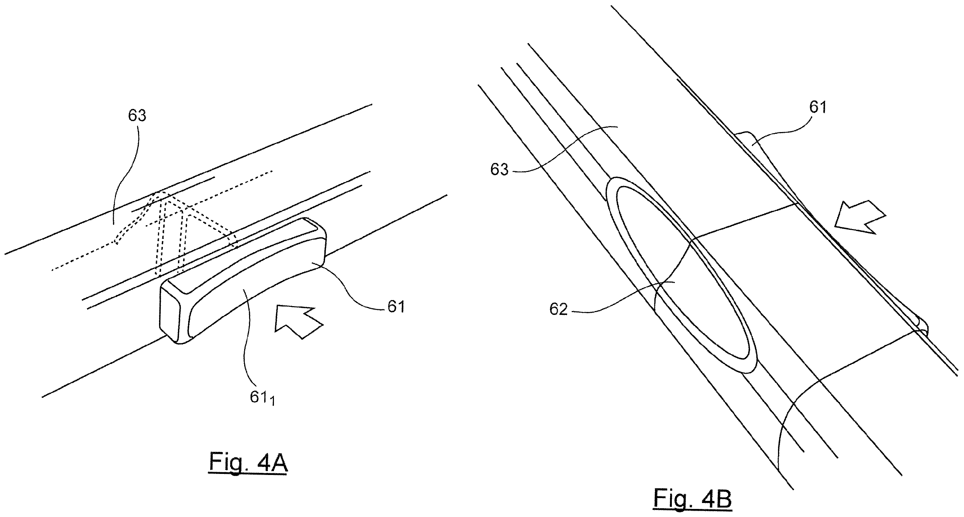

Les figures 4A et 4B illustrent, à titre d'exemple, une poignée 61, dont la surface d'appui 611 est concave, pour faciliter la prise en main. On peut en outre prévoir un bossage 62, par exemple en creux, sur une partie du cadre 63 opposée à la poignée, formant zone de préhension complémentaire, toujours pour faciliter la prise en main, faciliter la compréhension du mécanisme et permettre en un même mouvement le déverrouillage puis le déplacement en coulissement du panneau mobile.

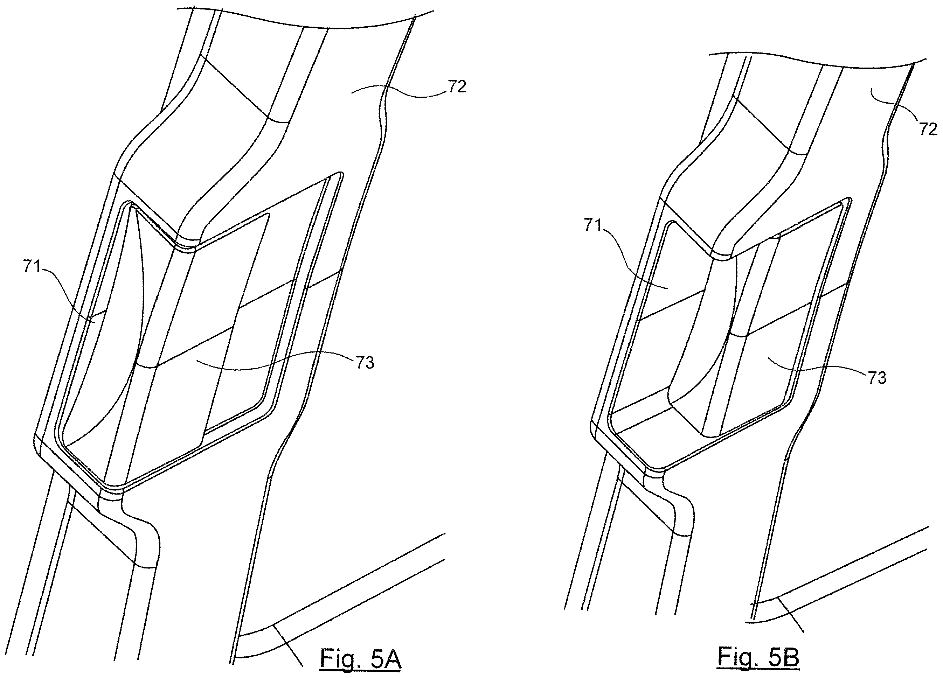

Il n'est bien sûr pas impératif que l'ouverture du cadre permettant le passage de la poignée soit uniquement sur le côté du cadre, comme illustré sur ces figures 4A et 4B. La poignée peut également être accessible en façade, comme illustré sur les figures 5A et 5B, présentant la poignée respectivement en position verrouillée et en position déverrouillée.

Sur ces figures, on constate que l'on a ménagé un logement 71 dans le montant 72 du cadre, pour recevoir et guidé la poignée 73. Celle-ci est donc aisément accessible, par le côté et/ou en façade. Le montant 72 du cadre est élargi, au niveau de cette poignée, pour loger intégralement celle-ci, dans toutes ses positions. Le logement 72 permet par ailleurs de contrôler le guidage rectiligne de la poignée 73.

Il serait également possible que le logement 71 ne soit accessible qu'en façade, et par exemple qu'il soit fermé par une paroi sur le côté. Dans ce cas, la surface de la poignée peut recevoir un bossage en creux, ou un autre élément facilitant l'actionnement.

### 6.4 variante de mise en œuvre : lame souple unique

Dans le mode de réalisation décrit ci-dessus, chaque pêne est contrôlé par une lame souple distincte, qui forme donc chacune, au sens des revendications, une portion de lame souple.

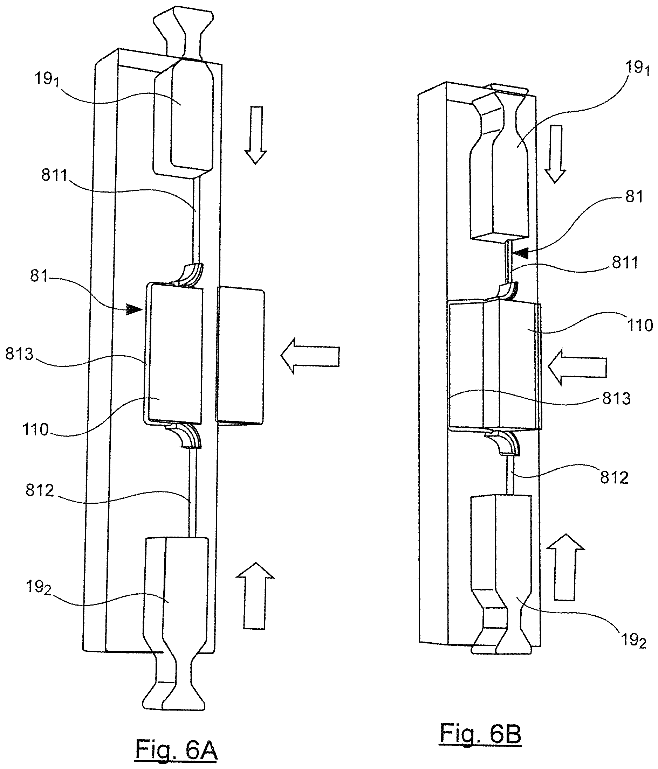

Selon une autre approche, il est possible d'utiliser une lame souple unique, comprenant les deux portions de lame souple, comme illustré par les figures 6A et 6B. Le fonctionnement reste le même que celui illustré précédemment, la lame souple 81, comprenant :
- une première portion de lame 811 contrôlant un premier pêne 19₁ ;
- une seconde portion de lame 812 contrôlant un premier pêne 19₂ ;
- une partie centrale 813, reliant les première et seconde portions de lame 811 et 812.

On comprend que le déplacement de la poignée 110 agit de la même façon que précédemment sur les pênes, via les première et seconde portions de lame 811 et 812. Celles-ci peuvent être solidarisées ou non à la poignée, la solidarisation pouvant être également effectuée au niveau de la partie centrale 813 (dans l'absolu, cette solidarisation n'est pas obligatoire, mais est préférable, pour conserver un bon équilibre du déverrouillage).

La partie centrale 813 peut notamment circuler le long de la poignée 110, comme illustré sur les figures, ou dans un logement (par exemple une rainure) ménagé dans cette poignée.

## Revendications

1. Dispositif d'obturation (1) d'une baie formée dans un élément de carrosserie d'un véhicule automobile, comprenant une partie fixe (11) et au moins un panneau mobile (16) par rapport à ladite partie fixe (11), guidé en coulissement par deux rails (15₁, 15₂) portés par ladite partie fixe (11),
ledit panneau mobile (16) portant deux pênes (19₁, 19₂) aptes à coopérer avec deux gâches correspondants, formés respectivement dans chacun desdits rails (15₁, 15₂), et mobiles selon une direction de déverrouillage perpendiculaire à la direction de coulissement dudit panneau mobile (16), entre une position de verrouillage dans laquelle lesdits pênes (19₁, 19₂) sont en prise avec lesdites gâches, et une position de déverrouillage, permettant le coulissement, dans laquelle lesdits pênes (19₁, 19₂) sont extraits desdites gâches,
ledit panneau mobile (16) portant une poignée (110) d'actionnement desdits pênes (19₁, 19₂), mobile selon une direction d'actionnement parallèle à ladite direction de coulissement, **caractérisé en ce que** ledit panneau mobile porte des moyens de renvoi d'angle (23₁, 23₂) mettant en œuvre, pour chaque pêne, une portion de lame souple, dont une première extrémité (232₁, 232₂) s'étend parallèlement à ladite direction de verrouillage et est fixée audit pêne (19₁, 19₂), et dont une seconde extrémité (231₁, 231₂) s'étend parallèlement à ladite direction d'actionnement et est fixée à ladite poignée (110),
des moyens de guidage de ladite portion de lame contrôlant le changement de direction entre lesdites directions de verrouillage et d'actionnement.

2. Dispositif d'obturation selon la revendication 1, **caractérisé en ce que** lesdits moyens de guidage comprennent un canal en arc de cercle de chaque côté de ladite poignée (110), défini par deux parois concentriques (31, 32).

3. Dispositif d'obturation selon la revendication 2, **caractérisé en ce que** lesdites parois (31, 32) sont solidarisées à une surface d'une portion d'un cadre (17) dudit panneau mobile (16), ou formées dans la masse de celle-ci.

4. Dispositif d'obturation selon l'une quelconque des revendications 2 ou 3 **caractérisé en ce que** l'une desdites parois (31, 32) assurent également une fonction de guidage de ladite poignée (110).

5. Dispositif d'obturation selon l'une quelconque des revendications 1 à 4, **caractérisé en ce que** ledit panneau mobile (16) porte au moins une portion de cadre s'étendant sensiblement entre les extrémités desdits pênes (19₁, 19₂), et présentant une ouverture sur son bord latéral (123) s'étendant sur le pourtour extérieur de ladite portion de cadre, et/ou sur sa surface principale, ou façade (121), permettant le déplacement de ladite poignée (110).

6. Dispositif d'obturation selon l'une quelconque des revendications 1 à 5, **caractérisé en ce qu'**il met en œuvre deux lames souples (22₁, 22₂), correspondant chacune à l'une desdites portions de lame souple.

7. Dispositif d'obturation selon l'une quelconque des revendications 1 à 5, **caractérisé en ce qu'**il met en œuvre une unique lame souple (81), présentant lesdites portions de lame souple (811, 812) et une partie centrale (813) circulant dans et/ou le long de ladite poignée (110).

8. Dispositif d'obturation selon l'une quelconque des revendications 1 à 7, **caractérisé en ce qu'**il comprend des moyens de rappel agissant sur chacun desdits pênes (19₁, 19₂), et tendant à les ramener dans ladite position de verrouillage,
et **en ce que** la ou lesdites lames souples (22₁, 22₂) ramènent ladite poignée (110) dans une position de repos, lorsque lesdits moyens de rappel ramènent lesdits pênes (19₁, 19₂) dans ladite position de verrouillage.

9. Dispositif d'obturation selon l'une quelconque des revendications 1 à 8, **caractérisé en ce que** la ou lesdites lames (22₁, 22₂, 81) sont en acier.

10. Véhicule automobile comprenant au moins un dispositif d'obturation (1) selon l'une quelconque des revendications précédentes.

## Patentansprüche

1. Vorrichtung (1) zum Verschließen einer Öffnung, die in einem Karosserieelement eines Kraftfahrzeugs ausgebildet ist, umfassend einen festen Teil (11) und mindestens ein in Bezug zu dem festen Teil (11) bewegliches Paneel (16), das gleitend von zwei Schienen (15₁, 15₂), die von dem festen Teil (11) getragen werden, geführt wird, wobei das bewegliche Paneel (16) zwei Bolzen (19₁, 19₂) trägt, die geeignet sind, mit zwei entsprechenden Schließblechen zusammenzuwirken, die jeweils in jeder der Schienen (15₁, 15₂) ausgebildet und in eine Entriegelungsrichtung senkrecht auf die Gleitrichtung des beweglichen Paneels (16) zwischen einer Verriegelungsposition, in der die Bolzen (19₁, 19₂) mit den Schließblechen in Eingriff sind, und einer Entriegelungsposition, die das Gleiten ermöglicht, in der die Bolzen (19₁, 19₂) aus den Schließblechen herausgezogen sind, beweglich sind, wobei das bewegliche Paneel (16) einen Griff (110) zur Betätigung der Bolzen (19ₐ, 19₂) trägt, der in eine Betätigungsrichtung parallel zur Gleitrichtung beweglich ist, **dadurch gekennzeichnet, dass** das bewegliche Paneel Winkelgetriebemittel (23₁, 23₂) trägt, die für jeden Bolzen einen flexiblen Lamellenabschnitt einsetzen, dessen erstes Ende (232₁, 232₂) sich parallel zur Verriegelungsrichtung erstreckt und am Bolzen (19₁, 19₂) befestigt ist, und dessen zweites Ende (231₁, 231₂) sich parallel zur Betätigungsrichtung erstreckt und am Griff (110) der Führungsmittel des Lamellenabschnitts befestigt ist, der die Richtungsänderung zwischen den Verriegelungs- und Betätigungsrichtungen steuert.

2. Verschlussvorrichtung nach Anspruch 1, **dadurch gekennzeichnet, dass** die Führungsmittel einen kreisbogenförmigen Kanal auf jeder Seite des Griffs (110) umfassen, der durch zwei konzentrische Wände (31, 32) definiert ist.

3. Verschlussvorrichtung nach Anspruch 2, **dadurch gekennzeichnet, dass** die Wände (31, 32) mit einer Fläche eines Abschnitts eines Rahmens (17) des beweglichen Paneels (16) verbunden oder in der Masse derselben ausgebildet sind.

4. Verschlussvorrichtung nach einem der Ansprüche 2 oder 3, **dadurch gekennzeichnet, dass** eine der Wände (31, 32) auch eine Führungsfunktion des Griffs (110) gewährleistet.

5. Verschlussvorrichtung nach einem der Ansprüche 1 bis 4, **dadurch gekennzeichnet, dass** das bewegliche Paneel (16) mindestens einen Rahmenabschnitt trägt, der sich im Wesentlichen zwischen den Enden der Bolzen (19₁, 19₂) erstreckt und eine Öffnung an seinem seitlichen Rand (123) aufweist, die sich auf dem äußeren Umfang des Rahmenabschnitts und/oder auf seiner Hauptfläche oder Vorderfläche (121) erstreckt und die Verschiebung des Griffs (110) ermöglicht.

6. Verschlussvorrichtung nach einem der Ansprüche 1 bis 5, **dadurch gekennzeichnet, dass** sie zwei flexible Lamellen (22₁, 22₂) einsetzt, die jeweils einem der Abschnitte der flexiblen Lamelle entsprechen.

7. Verschlussvorrichtung nach einem der Ansprüche 1 bis 5, **dadurch gekennzeichnet, dass** sie eine einzige flexible Lamelle (81) einsetzt, die die flexiblen Lamellenabschnitte (811, 812) und einen zentralen Teil (813) aufweist, der im Griff und/oder entlang des Griffs (110) umläuft.

8. Verschlussvorrichtung nach einem der Ansprüche 1 bis 7, **dadurch gekennzeichnet, dass** sie Rückstellmittel umfasst, die auf jeden der Bolzen (19₁, 19₂) einwirken und dazu neigen, sie in die Verriegelungsposition zurückzuführen, und dass die flexible(n) Lamelle(n) (22₁, 22₂) den Griff (110) in eine Ruheposition zurückführen, wenn die Rückstellmittel die Bolzen (19₁, 19₂) in die Verriegelungsposition zurückführen.

9. Verschlussvorrichtung nach einem der Ansprüche 1 bis 8, **dadurch gekennzeichnet, dass** die Lamelle(n) (22₁, 22₂, 81) aus Stahl sind.

10. Kraftfahrzeug, umfassend mindestens eine Verschlussvorrichtung (1) nach einem der vorhergehenden Ansprüche.

## Claims

1. Device (1) for closing off a bay formed in a bodywork element of a motor vehicle, comprising a fixed part (11) and at least one mobile panel (16) relative to said fixed part (11), the sliding of which is guided by two rails (15₁, 15₂) carried by said fixed part (11), said mobile panel (16) bearing two bolts (19₁, 19₂) capable of cooperating with two corresponding strikers, respectively formed in each of said rails (15₁, 15₂), and being mobile in a direction of unlocking perpendicular to the direction of sliding of said mobile panel (16), between a locked position in which said bolts (19₁, 19₂) are engaged with said strikers, and an unlocked position enabling sliding, in which said bolts (19₁, 19₂) are removed from said strikers,
said mobile panel (16) carrying an actuating handle (110) for actuating said bolts (19₁, 19₂), that is mobile in one direction of actuation parallel to said direction of sliding, **characterized in that** said mobile panel carries angular gear transmission means (23₁, 23₂) implementing, for each bolt, a flexible leaf portion, a first end (232₁, 232₂) of which extends in parallel to said direction of unlocking and is fixed to said bolt (19₁, 19₂), and a second end (231₁, 231₂) of which extends in parallel to said direction of actuating and is fixed to said handle (110),
means for guiding said leaf portion controlling the change in direction between said directions of unlocking and actuating.

2. Device for closing off according to claim 1, **characterized in that** said guiding means comprise a channel shaped as an arc of a circle on each side of said handle (110), defined by two concentric walls (31, 32).

3. Device for closing off according to claim 2, **characterized in that** said walls (31, 32) are fixedly attached to a surface of a portion of a frame (17) of said mobile panel (16), or formed in the mass of this mobile panel.

4. Device for closing off according to one of the claims 2 or 3, **characterized in that** one of said walls (31, 32) also fulfils a function of guiding said handle (110).

5. Device for closing off according to one of the claims 1 to 4, **characterized in that** said mobile panel (16) bears at least one frame portion extending appreciably between the ends of said bolts (19₁, 19₂), and having an aperture on its lateral face (123) extending towards the exterior of said mobile panel and/or on its front (121), enabling said handle (110) to be moved.

6. Device for closing off according to one of the claims 1 to 5, **characterized in that** it implements two flexible leaf elements (22₁, 22₂) each corresponding to one of said flexible leaf portions.

7. Device for closing off according to one of the claims 1 to 5, **characterized in that** it implements a single flexible leaf element (81), presenting said flexible leaf portions (811, 812) and a central part (813) circulating in and/or along said handle (110).

8. Device for closing off according to one of the claims 1 to 7, **characterized in that** it comprises return means acting on each of said bolts (19₁, 19₂) and tending to bring them back into said locked position,
and **in that** said flexible leaf element or elements (22₁, 22₂) bring said handle (110) back to a resting position when said return means brings said bolts (19₁, 19₂) back into said locked position.

9. Device for closing off according to one of the claims 1 to 8, **characterized in that** said leaf element or elements (22₁, 22₂) are made of steel.

10. Motor vehicle comprising at least one device (1) for closing off according to any of the above claims.
